# EUROPÄISCHE PATENTSCHRIFT

(11) **EP 0 798 544 B1**
(45) Veröffentlichungstag und Bekanntmachung des Hinweises auf die Patenterteilung: **10.07.2002**
(21) Anmeldenummer: 97104340.1
(22) Anmeldetag: 14.03.1997
(51) Int. Cl.: G01G 3/14, G01L 1/22

(54) **Wägezelle**
Load cell
Capteur de pesage

(30) Priorität: 25.03.1996 DE 19611484
(43) Veröffentlichungstag der Anmeldung: 01.10.1997
(73) Patentinhaber: Schenck Process GmbH, 64293 Darmstadt (DE)
(72) Erfinder: Bischoff Brüne, 64342 Seeheim (DE)
(74) Vertreter: Behrens, Helmut, Dipl.-Ing.

(56) Entgegenhaltungen:
- EP-A- 0 288 985
- EP-A- 0 338 325
- EP-A- 0 465 881
- DE-U- 8 901 100
- BETHE K: "OPTIMIZATION OF A COMPACT FORCE-SENSOR/LOAD-CELL FAMILY" SENSORS AND ACTUATORS A, Bd. A42, Nr. 1/03, 15.April 1994, Seiten 362-367, XP000449941

## Beschreibung

Die Erfindung betrifft eine Wägezelle mit rotationssymmetrischer Meßfeder, die eine zentrale Krafteinleitungsplatte aufweist, die über einen ersten Rohrabschnitt mit einem Dehnungsmeßelemente tragenden Verformungsring verbunden ist, der konzentrisch zwischen dem ersten und einem zweiten Rohrabschnitt angeordnet ist, welcher den Verformungsring mit einem Fußteil verbindet, wobei der erste Rohrabschnitt vom Verformungsring getrennt durch eine Ringnut mit im wesentlichen parallel zur Längsachse der Wägezelle verlaufenden seitlichen Begrenzungswänden und mit zwei Übergangsradien im Nutgrund, zumindest teilweise umgeben ist.

Eine derartige Wägezelle ist als eines von mehreren Ausführungsbeispielen in der DE-PS 1268878 dargestellt. Diese in der Praxis nicht realisierte Ausführungsform soll der Darstellung eines Verformungskörpers mit rechteckigem Querschnitt dienen. Geometrische Relationen lassen sich dieser prinzipiellen Darstellung, bei welcher die Übergangsradien der jeweiligen Ringnuten, die die Rohrabschnitte begrenzen einander identisch sind, nicht entnehmen. Versuchsmuster, die in etwa der genannten Darstellung nachempfunden wurden, zeigten nicht zu tolerierende Hystereseeffekte, die eine Verwendung für eichpflichtige Wägezellen ausschloß. Zwar konnte durch entsprechende (Über-) Dimensionierung eine Verringerung des Hystereseeffektes erreicht werden, jedoch wiesen diese Ausführungen dann eine zu hohe Baugröße und einen ungünstig hohen Materialaufwand auf.

Der Erfindung liegt daher die Ausgabe zugrunde, eine kostengünstig herstellbare gattungsgemäße Wägezelle zu schaffen, die sich durch eine besondere Kompaktheit auszeichnet und dabei die Anforderungen für eichpflichtige Wägezellen erfüllt.

Diese Aufgabe wird dadurch gelöst, daß derjenige Übergangsradius, der der radial inneren Begrenzungswand zugeordnet ist etwa den zwei- bis zehnfachen Wert desjenigen Übergangsradius aufweist, der der radial äußeren Begrenzungswand zugewandt ist.

Diese erfindungsgemäße Lösung verhindert durch die Begrenzung der Spannungsüberhöhung im Nutgrund teilplastische Verformungen, die zu Hystereseeffekten führen. Die erfindungsgemäße Wägezelle ist daher trotz seiner kompakten Bauform sehr robust gegenüber einer Überlastung. Auf zusätzliche Überlastanschläge, wie beispielsweise in der DE-PS 1268878 dargestellt, kann daher verzichtet werden. Die Erfindung ermöglicht es, trotz extrem geringer Außenabmessungen eine leistungsfähige und eichbare Wägezelle aus einem rostfreien Stahl zu fertigen. Durch die genannte Begrenzung der Spannungsüberhöhung im Nutgrund kann nämlich auf die Verwendung eines Werkzeugstahles verzichtet werden, so daß ein zusätzliches Gehäuse zum Zwecke des Schutzes vor Korrosion entfallen kann.

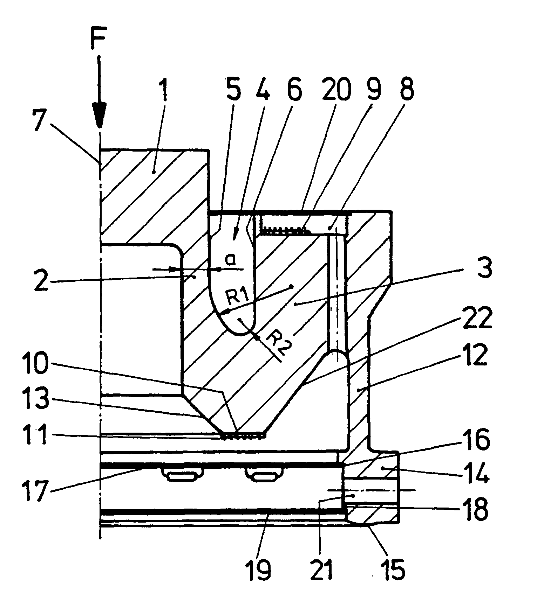

Weitere vorteilhafte Merkmale der Erfindung ergeben sich aus den abhängigen Ansprüchen sowie der nachstehenden Beschreibung eines Ausführungsbeispiels der Erfindung anhand der Zeichnung.

Die Figur zeigt hierzu einen Halbschnitt durch eine erfindungsgemäße Wägezelle. Diese einstückig ausgebildete Wägezelle besitzt eine zentrale Krafteinleitungsplatte 1, deren äußerer Rand in einen axial nach unten gerichteten ersten Rohrabschnitt 2 mit einer Wandstärke a übergeht. Der erste Rohrabschnitt 2 verbindet die Krafteinleitungsplatte 1 mit dem Verformungsring 3, der den ersten Rohrabschnitt 2 radial umgibt und auch die Krafteinleitungsplatte 1 etwa zur halben Höhe umfaßt. Zwischen dem ersten Rohrabschnitt 2 und dem Verformungsring 3 ist ein radialer Abstand vorgesehen, der durch eine umlaufende Ringnut 4 gebildet ist. Die Ringnut 4 weist seitliche Begrenzungswände 5 und 6 auf, die parallel zur Längsachse 7 der Wägezelle verlaufen. Der Nutgrund der Ringnut 4 wird durch zwei ineinander übergehende Radien R1 und R2 gebildet. Der Abstand zwischen den Begrenzungswänden 5,6 beträgt etwa das eineinhalbfache der Wandstärke a. Der dem ersten Rohrabschnitt 2 zugeordnete Übergangsradius R1 ist dabei etwa acht mal so groß wie der dem Verformungsring 3 zugeordnete Übergangsradius R2. Besonders vorteilhaft wirkt es sich auf den Spannungsverlauf in diesem Bereich aus, wenn statt des Übergangsradius R1 eine Viertelellipse oder ein Korbbogen, der sich aus zwei mit gemeinsamer Tangente ineinander übergehenden Radien zusammensetzt, verwendet wird.

Die obere Stirnseite des Verformungsringes 3 ist mit einer ringförmigen umlaufenden Rechtecknut 8 versehen, die der Aufnahme eines ringförmigen, am Boden der Rechtecknut 8 applizierten Dehnungsmeßstreifens 9 dient.

Der Querschnitt des unteren stirnseitigen Endes des Verformungsringes 3 ist in Form eines sich nach unten verjüngenden Kegelstumpfes ausgebildet, wobei sich die in der Radialebene liegende Ringfläche 10, die der Applikation des unteren ringförmigen Dehnungsmeßstreifens 11 dient, genau unterhalb der Ringnut 4 befindet.

An der konisch verlaufenden äußeren Mantelfläche des Verformrungsringes 3 ist, etwa in axialer Höhe des Nutgrundes der Ringnut 4, der zweite Rohrabschnitt 12 angeformt, der parallel zur Längsachse 7 nach unten führt. Der konische Außenmantel 22 und der zweite Rohrabschnitt 12 schließen dabei einen Winkel von etwa 55° ein. Zwischen der parallel zur Längsachse 7 verlaufenden inneren Mantelseite des ersten Rohrabschnitts 2 und der Ringfläche 10 verläuft ein konischer Abschnitt 13, dessen Schrägungswinkel etwa 45° zur Längsachse 7 beträgt.

Der zweite Rohrabschnitt 12 mündet in den Wägezellenfuß 14, der als gegenüber dem Rohrabschnitt 12 verstärkt ausgebildeter Ring ausgeführt ist. An seiner unteren Stirnseite ist der Wägezellenfuß 14 mit einer als verrundeter Bund oder als plane Fläche ausgeführten umlaufenden Krafteinleitungsfläche 15 versehen, deren Radius dem des zweiten Rohrabschnittes 12 entspricht. Dadurch treten während der Belastung keine Relativbewegungen zwischen der Wägezelle und dem Fundament auf, was sich vorteilhaft auf die Hystereseeigenschaften auswirkt.

Der Wägezellenfuß 14 besitzt an seiner inneren Mantelfläche eine Stufe 16, an der die Leiterplatte 17, die die elektronische Schaltung enthält, fixiert ist. In einer weiteren Stufe 18 liegt der Verschlußdeckel 19 an, der mit dem Wägezellenfuß 14 verschweißt wird.

Ein weiterer, ringförmig ausgebildeter Verschlußdeckel 20 ist auf der Oberseite des Verformungsringes 3 dichtend befestigt und schützt den Dehnungsmeßstreifen 9. Um eine Verdrahtung des Dehnungsmeßstreifens 9 mit der Leiterplatte 17 herstellen zu können, ist der Verformungsring 3 im Bereich der Ringnut 4 mit mindestens einer Längsbohrung versehen, die als Kabelschacht dient. Der Durchführung der Kabel für die Versorgungsspannung und für das Ausgangssignal dient die Querbohrung 21 im Wägezellenfuß 14. Der Wägezellenfuß überragt den 2. Rohrabschnitt 12 radial nach außen. Dieses Außenmaß weist auch die äußere Mantelfläche des Verformungsringes 3 im oberen Bereich auf. Etwa in Verlängerung des oben beschriebenen konischen Außenmantels 22 verjüngt sich dieses Außenmaß auf den Außendurchmesser des 2. Rohrabschnittes 12, dessen Wandstärke etwa derjenigen des 1. Rohrabschnittes 2 entspricht. Durch die als elastische Gelenke wirkenden Rohrabschnitte 2,12 wird eine hysteresefreie Verformung des Verformungsringes 3 sichergestellt.

Wird die Wägezelle über die Krafteinleitungsplatte 1 mit einer Kraft F belastet, so erfährt der Dehnungsmeßstreifen 9 eine Stauchung, während der Dehnungsmeßstreifen 11 gedehnt wird. Die Dehnungsmeßstreifen sind auf der Leiterplatte 17 zu einer wheatstone'schen Meßbrücke verschaltet, deren Ausgangssignal proportional der beaufschlagenden Kraft F ist.

## Patentansprüche

1. Wägezelle mit rotationssymmetrischer Meßfeder, die eine zentrale Krafteinleitungsplatte (1) aufweist, die über einen ersten Rohrabschnitt (2) mit einem Dehnungsmeßelemente tragenden Verformungsring (3) verbunden ist, der konzentrisch zwischen dem ersten (2) und einem zweiten Rohrabschnitt (12) angeordnet ist, welcher den Verformungsring (3) mit einem Fußteil (14) verbindet, wobei der erste Rohrabschnitt (2), vom Verformungsring (3) getrennt durch eine Ringnut (4) mit im wesentlichen parallel zur Längsachse (7) der Wägezelle verlaufenden seitlichen Begrenzungswänden (5,6) und mit zwei Übergangsradien (R₁, R₂) im Nutgrund, zumindest teilweise umgeben ist, **dadurch gekennzeichnet, daß** der der radial inneren Begrenzungswand (5) zugeordnete Übergangsradius (R1) etwa den zwei- bis zehnfachen Wert des der radial äußeren Begrenzungswand (6) zugeordneten Radius (R2) aufweist.

2. Wägezelle nach Anspruch 1, **dadurch gekennzeichnet, daß** jeweils ringförmige Dehnungsmeßelemente (9,11) an in axialer Richtung voneinander abgewandten Stirnseiten des Verformungsringes (3) angebracht sind, wobei die dem Fußteil (14) zugewandten Dehnungsmeßelemente (11) einen geringeren Ringdurchmesser aufweisen, als die der Krafteinleitungsplatte (1) zugewandten Dehnungsmeßelemente (9).

3. Wägezelle nach einem der vorhergehenden Ansprüche, **dadurch gekennzeichnet, daß** die Übergangsradien (R1,R2) unmittelbar ineinander übergehen.

4. Wägezelle nach einem der vorhergehenden Ansprüche, **dadurch gekennzeichnet, daß** der der radial inneren Begrenzungswand (5) zugeordnete Übergangsradius (R1) größer als die Wandstärke (a) des ersten Rohrabschnittes (2) ist.

5. Wägezelle nach einem der vorhergehenden Ansprüche, **dadurch gekennzeichnet, daß** der Ringdurchmesser der dem Fußteil (14) zugewandten Dehnungsmeßelemente (11) kleiner oder gleich dem Durchmesser der Ringnut (4) ist.

6. Wägezelle nach einem der vorhergehenden Ansprüche, **dadurch gekennzeichnet, daß** das Fußteil (14) eine definierte, ringförmige Krafteinleitungsfläche (15) aufweist, deren Durchmesser dem Durchmesser des zweiten Rohrabschnittes (12) entspricht.

7. Wägezelle nach Anspruch 6, **dadurch gekennzeichnet, daß** die Krafteinleitungsfläche (15) mit verrundeter Kontur ausgeführt ist.

## Claims

1. A weighing cell which incorporates rotationally symmetrical measuring springs and comprises a central loading plate (1) that is connected via a first tubular section (2) to a deformation ring (3) which supports a resistance strain gauge element and is arranged concentrically between the first (2) and a second tubular section (12) which connects the deformation ring (3) to a foot part (14), wherein the first tubular section (2) is separated from the deformation ring (3) in that it is at least partially surrounded by an annular groove (4) which comprises two transition radii (R1, R2) in the base of the groove and has lateral boundary walls (5, 6) that extend substantially in parallel with the longitudinal axis (7) of the weighing cell, **characterised in that** the transition radius (R1) associated with the radially inner boundary wall (5) has a value which is approximately two to ten times greater than that of the radius (R2) associated with the radially outer boundary wall (6).

2. A weighing cell in accordance with Claim 1, **characterised in that** respective annular resistance strain gauge elements (9, 11) are attached to the axially remote end faces of the deformation ring (3), the resistance strain gauge element (11) facing the foot part (14) having a smaller annular diameter than that of the resistance strain gauge element (9) facing the loading plate (1) .

3. A weighing cell in accordance with any of the preceding Claims, **characterised in that** the transition radii (R1, R2) merge directly into one another.

4. A weighing cell in accordance with any of the preceding Claims, **characterised in that** the transition radius (R1) associated with the radially inner boundary wall (5) is larger than the wall thickness (a) of the first tubular section (2).

5. A weighing cell in accordance with any of the preceding Claims, **characterised in that** the annular diameter of the resistance strain gauge element (11) facing the foot part (14) is less than or is the same as the diameter of the annular groove (4).

6. A weighing cell in accordance with any of the preceding Claims, **characterised in that** the foot part (14) comprises a defined annular loading face (15) having a diameter that corresponds to the diameter of the second tubular section (12).

7. A weighing cell in accordance with Claim 6, **characterised in that** the loading face (15) has a rounded contour.

## Revendications

1. Cellule de pesée avec ressort de mesure à symétrie de révolution, qui comporte une plaque centrale (1) d'introduction des forces, laquelle est reliée, par une première partie tubulaire (2), à un anneau de déformation (3) portant des éléments de mesure d'allongement, lequel est disposé concentriquement entre la première partie tubulaire (2) et une deuxième partie tubulaire (12) qui relie l'anneau de déformation (3) à un élément formant pied (14), la première partie tubulaire (2), séparée de l'anneau de déformation (3), étant entourée, au moins partiellement, par une rainure annulaire (4) avec parois de délimitation (5, 6) latérales s'étendant sensiblement parallèlement à l'axe longitudinal (7) de la cellule de pesée, et avec deux rayons de transition (R1, R2) dans le fond de la rainure, **caractérisée en ce que** le rayon de transition (R1) associé à la paroi de délimitation (5) intérieure radialement, représente environ de deux à dix fois la valeur du rayon (R2) associé à la paroi de délimitation (6) radialement extérieure.

2. Cellule de pesée selon la revendication 1, **caractérisée en ce que** des éléments de mesure d'allongement (9, 11) de forme annulaire sont placés sur chacun des côtés frontaux de l'anneau de déformation (3), tournés à l'opposé l'un de l'autre dans la direction axiale, les éléments de mesure d'allongement (11), tournés vers l'élément formant pied (14), présentant un diamètre d'anneau inférieur à celui des éléments de mesure d'allongement (9) tourné vers la plaque (1) d'introduction des forces.

3. Cellule de pesée selon l'une des revendications précédentes, **caractérisée en ce que** les rayons de transition (R1, R2) se prolongent directement l'un l'autre.

4. Cellule de pesée selon l'une des revendications précédentes, **caractérisée en ce que** le rayon de transition (R1), associé à la paroi de délimitation (5) radialement intérieure, est plus grand que l'épaisseur de paroi (a) de la première partie tubulaire (2).

5. Cellule de pesée selon l'une des revendications précédentes, **caractérisée en ce que** le diamètre d'anneau des éléments de mesure d'allongement (11) tournés vers l'élément formant pied (14) est plus petit ou égal au diamètre de la rainure annulaire (4).

6. Cellule de pesée selon l'une des revendications précédentes, **caractérisée en ce que** l'élément formant pied (14) présente une surface d'introduction des forces (15) définie, de forme annulaire, dont le diamètre correspond au diamètre de la deuxième partie tubulaire (12).

7. Cellule de pesée selon la revendication 6, **caractérisée en ce que** la surface d'introduction des forces (15) présente un contour arrondi.
